(19) Europäisches Patentamt
European Patent Office
Office européen des brevets

(11) EP 4 692 203 A1

(12) **EUROPEAN PATENT APPLICATION**
published in accordance with Art. 153(4) EPC

(43) Date of publication:
**11.02.2026 Bulletin 2026/07**

(21) Application number: **24779890.3**

(22) Date of filing: **21.03.2024**

(51) International Patent Classification (IPC):
***C08L 9/06** (2006.01)* ***C08C 19/44** (2006.01)*
***C08K 3/013** (2018.01)* ***C08L 15/00** (2006.01)*
***C08L 57/00** (2006.01)*

(52) Cooperative Patent Classification (CPC):
**C08C 19/44; C08K 3/013; C08L 9/06; C08L 15/00; C08L 57/00**

(86) International application number:
**PCT/JP2024/011145**

(87) International publication number:
**WO 2024/203771 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 JP 2023052401**

(71) Applicants:
- **ENEOS Materials Corporation**
  **Tokyo 105-7109 (JP)**
- **BRIDGESTONE CORPORATION**
  **Chuo-ku**
  **Tokyo 104-8340 (JP)**

(72) Inventors:
- **FURUKAWA, Sei**
  **Tokyo 100-8162 (JP)**
- **ASHIURA, Makoto**
  **Tokyo 100-8162 (JP)**
- **TSUTSUMI, Toshiyuki**
  **Tokyo 100-8162 (JP)**
- **KAMEYAMA, Atsushi**
  **Tokyo 100-8162 (JP)**
- **MATSUMOTO, Takaomi**
  **Tokyo 105-7109 (JP)**
- **FUEKI, Takafumi**
  **Tokyo 105-7109 (JP)**
- **FUJIWARA, Keisuke**
  **Tokyo 105-7109 (JP)**
- **TADAKI, Toshihiro**
  **Tokyo 104-8340 (JP)**
- **YAMADA, Takumi**
  **Tokyo 104-8340 (JP)**
- **TSUCHIDA, Kazutaka**
  **Tokyo 104-8340 (JP)**

(74) Representative: **Müller-Boré & Partner Patentanwälte PartG mbB**
**Friedenheimer Brücke 21**
**80639 München (DE)**

# (54) POLYMER COMPOSITION AND RUBBER PRODUCT

(57) [Problem] To provide a polymer composition that can be used to produce tire products having high grip performance and high abrasion resistance. [Solution] The polymer composition of the present invention includes: a rubber component including a conjugated diene polymer (A-1); and at least one selected from the group consisting of a polymer of a raw material component containing a C5 fraction containing an aliphatic olefin, and a polymer of a raw material component containing a C9 fraction containing an aromatic olefin and a C5 fraction containing an aliphatic olefin, in which the conjugated diene polymer (A-1) comprises a structural unit derived from a conjugated diene compound and a structural unit derived from an aromatic vinyl compound; the amount of the structural unit derived from an aromatic vinyl compound is 5% by mass or more and 60% by mass or less with respect to the total amount of the structural unit derived from a conjugated diene compound and the structural unit derived from an aromatic vinyl compound; and the amount of a segment including isolated aromatic vinyl compound units in which the aromatic vinyl compound units are not continuous is less than 40% by mass, and the amount of a segment including a long sequence of consecutive aromatic vinyl compound units in which 8 or more aromatic vinyl compound units are continuous is 10% by mass or less, with respect to the amount of the



EP 4 692 203 A1

structural unit derived from an aromatic vinyl compound.

## Description

BACKGROUND OF THE INVENTION

Field of the Invention

The present invention relates to a polymer composition. The present invention also relates to a rubber product formed using the polymer composition.

Background Art

Conventionally, tires have been produced from a rubber composition containing a vulcanizing agent responsible for vulcanization, a filler such as carbon black or silica, an antidegradant and wax for suppressing quality degradation, and the like, and improvements have been made for each of these components.

In recent years, tires have been required to have various performances such as grip performance and rolling resistance. For example, Patent Document 1 describes a rubber composition containing a hydrogenated dicyclopentadiene (DCPD)-based petroleum resin. In Patent Document 1, it has been found that a composition containing a specific hydrogenated DCPD-based resin has high grip performance and low rolling resistance. In addition, Patent Document 2 describes a rubber composition for a tire inner liner containing a C5, C9, or hydrogenated DCPD hydrocarbon resin. It has been found that a composition comprising at least one selected from the group consisting of a DCPD-based polymer, a cyclopentadiene (CPD)-based polymer, a DCPD-styrene copolymer, C5 homopolymer and copolymer resins, a C5-styrene copolymer resin, a terpene homopolymer or copolymer resin, a pinene homopolymer or copolymer resin, C9 homopolymer and copolymer resins, a C5/C9 copolymer resin, an alpha-methylstyrene homopolymer or copolymer resin, and combinations thereof has a low air permeability coefficient.

PATENT DOCUMENTS

Patent Document 1: JP-T 2018-536044
Patent Document 2: JP-A 2018-193567

SUMMARY OF THE INVENTION

Problems to Be Solved by the Invention

However, for the rubber compositions described in Patent Documents 1 and 2, there was room for improvement in the balance between grip performance and abrasion resistance.

Accordingly, as a result of intensive studies to solve the above problem, the present inventors have surprisingly found that a tire produced using a polymer composition containing a specific rubber component and a specific polymer of a raw material component has high grip performance and high abrasion resistance. Based on such findings, the present inventors have completed the present invention.

Means for Solving the Problems

That is, according to the present invention, there are provided:

[1] A polymer composition, comprising:

a rubber component comprising a conjugated diene polymer (A-1); and
at least one selected from the group consisting of a polymer of a raw material component containing a C5 fraction containing an aliphatic olefin, and a polymer of a raw material component containing a C9 fraction containing an aromatic olefin and a C5 fraction containing an aliphatic olefin,
wherein
said conjugated diene polymer (A-1) comprises a structural unit derived from a conjugated diene compound and a structural unit derived from an aromatic vinyl compound;
the amount of the structural unit derived from an aromatic vinyl compound is 5% by mass or more and 60% by mass or less with respect to the total amount of the structural unit derived from a conjugated diene compound and

the structural unit derived from an aromatic vinyl compound; and
the amount of a segment comprising isolated aromatic vinyl compound units in which the aromatic vinyl compound units are not continuous is less than 40% by mass, and the amount of a segment comprising a long sequence of consecutive aromatic vinyl compound units in which 8 or more aromatic vinyl compound units are continuous is 10% by mass or less, with respect to the amount of the structural unit derived from an aromatic vinyl compound.

[2] The polymer composition according to [1], wherein said C5 fraction containing an aliphatic olefin comprises at least one selected from the group consisting of piperylene, isoprene, 1-pentene, 2-pentene, 2-methyl-1-butene, 2-methyl-2-butene, and 3-methyl-1-butene.
[3] The polymer composition according to [1] or [2], wherein said C9 fraction containing an aromatic olefin comprises at least one selected from the group consisting of vinyltoluene, alpha-methylstyrene, styrene, indene, and methylindene.
[4] The polymer composition according to any one of [1] to [3], wherein the proton amount per molecule of said polymer of a raw material component satisfies the following conditions:

$0 \leq$ aromatic proton amount $\leq 95$; and
$0 \leq$ olefin proton amount $\leq 90$.

[5] The polymer composition according to any one of [1] to [4], wherein the number average molecular weight (Mn) of said polymer of a raw material component is 300 g/mol or more and less than 3000 g/mol.
[6] The polymer composition according to any one of [1] to [5], wherein the amount of said conjugated diene polymer (A-1) is 5% by mass or more of the total amount of the rubber component.
[7] The polymer composition according to any one of [1] to [6], wherein said conjugated diene polymer (A-1) has a nitrogen-containing group and a hydrocarbyloxysilyl group.
[8] The polymer composition according to any one of [1] to [7], further comprising a filler.
[9] A rubber product formed using the polymer composition according to any one of [1] to [8].
[10] The rubber product according to [9], wherein said rubber product is selected from the group consisting of a tire, a tire tread, and a sidewall.

Effect of Invention

According to the present invention, a polymer composition that can be used to produce tire products having high grip performance and high abrasion resistance can be provided. Furthermore, according to the present invention, a tire having high grip performance and high abrasion resistance can be produced.

DETAILED DESCRIPTION OF THE INVENTION

In this specification, a numerical range described as "A to B" is interpreted as including numerical value A as a lower limit and numerical value B as an upper limit.

[Polymer Composition]

The polymer composition of the present invention comprises a rubber component and a polymer of a raw material component, and may further comprise a filler and a silane coupling agent. Tires produced using the polymer composition of the present invention have high grip performance and high abrasion resistance. Hereinafter, each component contained in the polymer composition will be described in detail. As used herein, the "rubber component" contained in the polymer composition refers to a polymer capable of yielding a cured product exhibiting rubber elasticity through thermosetting. The cured product exhibits properties of undergoing large deformation with a small force at room temperature (e.g., deformation that stretches to twice or more at room temperature) and rapidly returning to substantially its original shape when the force is removed.

(Rubber Component)

The rubber component used in the polymer composition comprises at least a conjugated diene polymer (A-1), and may further comprise other rubber components (hereinafter, also simply referred to as "other rubber components") in addition to A-1.

(Conjugated Diene Polymer (A-1))

The conjugated diene polymer (A-1) comprises a structural unit derived from a conjugated diene compound and a structural unit derived from an aromatic vinyl compound, and satisfies the following conditions (1) and (2). By satisfying the following conditions (1) and (2), the conjugated diene polymer (A-1) can be used to produce tires having high grip performance and high abrasion resistance.

(1) The amount of the structural unit derived from an aromatic vinyl compound is 5% by mass or more and 60% by mass or less with respect to the total amount of the structural unit derived from a conjugated diene compound and the structural unit derived from an aromatic vinyl compound. The amount of the structural unit derived from an aromatic vinyl compound is preferably 55% by mass or less, more preferably 50% by mass or less, and preferably 10% by mass or more, more preferably 15% by mass or more, with respect to the total amount of the structural unit derived from a conjugated diene compound and the structural unit derived from an aromatic vinyl compound. The content ratio of the structural unit derived from an aromatic vinyl compound in the polymer is a value measured by $^1$H-NMR.
(2) With respect to the amount of the structural unit derived from an aromatic vinyl compound, the amount of a segment comprising isolated aromatic vinyl compound units in which the aromatic vinyl compound units are not continuous is less than 40% by mass, preferably 38% by mass or less, and may be 1% by mass or more, 5% by mass or more, 10% by mass or more, 15% by mass or more, or 20% by mass or more; and the amount of a segment comprising a long sequence of consecutive aromatic vinyl compound units in which 8 or more aromatic vinyl compound units are continuous is 10% by mass or less, preferably 5% by mass or less, and may be 0.1% by mass or more, 0.2% by mass or more, or 0.5% by mass or more. The sequence of aromatic vinyl compounds is calculated by analyzing the conjugated diene polymer by gel permeation chromatography after decomposition with ozone (Tanaka et al., Polymer, 22, 1721 (1981)).

The conjugated diene polymer (A-1) preferably has a nitrogen-containing group and a hydrocarbyloxysilyl group. The "hydrocarbyloxysilyl group" refers to a group in which at least one hydrocarbyloxy group is bonded to a silicon atom, and is represented by the following formula (1):
[Chem. 1]

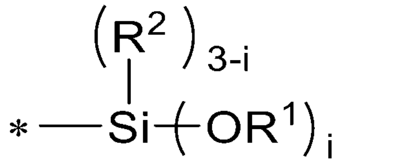
(1)

In formula (1), $R^1$ and $R^2$ are each independently a hydrocarbyl group. i is an integer from 1 to 3. When i is 1, a plurality of $R^2$ in the formula are the same or different. When i is 2 or 3, a plurality of $R^1$ in the formula are the same or different. "*" represents a bond.

Examples of the nitrogen-containing group include a primary amino group, a secondary amino group, a tertiary amino group, a protected primary amino group, a protected secondary amino group, an imino group, an imidazolyl group, an azasilolidyl group, and a silazane structure, with a primary amino group, a protected primary amino group, and an imino group being preferred, and a primary amino group being more preferred. Examples of the hydrocarbyloxysilyl group include a group represented by the above formula (1) where i is 3 and $R^1$ is a linear or branched alkyl group having 1 to 6 carbon atoms, and a group represented by the above formula (1) where i is 2 and $R^1$ and $R^2$ are each independently a linear or branched alkyl group having 1 to 6 carbon atoms, with a triethoxysilyl group or a diethoxymethylsilyl group being preferred, and a triethoxysilyl group being more preferred. By having a nitrogen-containing group and a hydrocarbyloxysilyl group, the conjugated diene polymer (A-1) achieves good high grip performance and high abrasion resistance.

When introducing a nitrogen-containing group and a hydrocarbyloxysilyl group into the conjugated diene polymer (A-1), the nitrogen-containing group and the hydrocarbyloxysilyl group may be introduced separately or simultaneously. Specific methods for introducing the nitrogen-containing group and the hydrocarbyloxysilyl group will be described in detail in the section of <Polymerization Step> or <Modification Step>.

The nitrogen-containing group and the hydrocarbyloxysilyl group may be introduced into the main chain terminal of the polymer, or into both the side chain and the main chain terminal of the polymer. Among these, it is preferable that the specific structure is introduced at least into the main chain terminal, from the viewpoint of being able to produce tires having high grip performance and high abrasion resistance. The "main chain" of a polymer refers to the longest "backbone" portion of the atomic chains in the polymer. The "side chain" of a polymer refers to a portion branched from the "backbone" of the polymer.

The amount of the conjugated diene polymer (A-1) is preferably 5% by mass or more, more preferably 10% by

mass or more, and still more preferably 20% by mass or more, with respect to the total amount of the rubber component, and may be 100% by mass or less, 90% by mass or less, or 80% by mass or less. If the amount of the conjugated diene polymer (A-1) is within the above numerical range, tires having high grip performance and high abrasion resistance can be produced.

(Method of Producing Conjugated Diene Polymer (A-1))

The conjugated diene polymer (A-1) can be obtained by copolymerizing a conjugated diene compound and an aromatic vinyl compound. Furthermore, a nitrogen-containing group and a hydrocarbyloxysilyl group can be introduced into the conjugated diene polymer (A-1) by reacting the conjugated diene polymer (A-1) with a compound having a nitrogen-containing group and a compound having a hydrocarbyloxysilyl group, or by reacting it with a compound having both a nitrogen-containing group and a hydrocarbyloxysilyl group. These reactions are not particularly limited, but for example, the conjugated diene polymer (A-1) is preferably produced by a method including the following polymerization step. Hereinafter, matters related to aspects of the present disclosure will be described in detail.

<Polymerization Step>

This step is a step of polymerizing monomers comprising a conjugated diene compound and an aromatic vinyl compound to obtain a conjugated diene polymer having active terminals. Examples of the conjugated diene compound used for polymerization include 1,3-butadiene, isoprene, 2,3-dimethyl-1,3-butadiene, 2-chloro-1,3-butadiene, and 1,3-pentadiene. These conjugated diene compounds can be used alone or in combination of two or more.

The amount of the structural unit derived from a conjugated diene compound can be adjusted as appropriate according to the condition (1) (amount of the structural unit derived from an aromatic vinyl compound) described above. The amount of the conjugated diene compound used is preferably 40% by mass or more and 95% by mass or less, more preferably 45% by mass or more and 95% by mass or less, and still more preferably 50% by mass or more and 95% by mass or less, with respect to the total amount of the conjugated diene compound and the aromatic vinyl compound used for polymerization.

Examples of the aromatic vinyl compound used for polymerization include styrene, 2-methylstyrene, 3-methylstyrene, 4-methylstyrene, alpha-methylstyrene, 2,4-dimethylstyrene, 2,4-diisopropylstyrene, 4-tert-butylstyrene, divinylbenzene, tert-butoxystyrene, vinylbenzyldimethylamine, (4-vinylbenzyl)dimethylaminoethyl ether, N,N-dimethylaminoethylstyrene, and vinylpyridine. These aromatic vinyl compounds can be used alone or in combination of two or more.

In the above polymerization, a compound other than a conjugated diene compound and an aromatic vinyl compound (hereinafter, also referred to as "third monomer") may be used as a monomer. Examples of the third monomer other than conjugated diene compounds and aromatic vinyl compounds include acrylonitrile, methyl methacrylate, ethyl methacrylate, methyl acrylate, ethyl acrylate, hydroxyethyl methacrylate, and hydroxyethyl acrylate. These third monomers can be used alone or in combination of two or more.

The amount of the third monomer used is preferably 25% by mass or less, more preferably 15% by mass or less, and may be 0% by mass or more, with respect to the total amount of monomers used for polymerization.

As for the polymerization method used, any of solution polymerization, vapor phase polymerization, or bulk polymerization may be used, but solution polymerization is particularly preferred. As for the polymerization format, either batch type or continuous type may be used, but batch type is preferred. When solution polymerization is used, one example of specific polymerization methods may be a method in which monomers comprising a conjugated diene compound and an aromatic vinyl compound are polymerized in an organic solvent in the presence of a polymerization initiator and, if necessary, a randomizer.

An alkali metal compound is used as the polymerization initiator. Specific examples of the alkali metal compound include alkyllithiums such as methyllithium, ethyllithium, n-propyllithium, n-butyllithium, secbutyllithium, and t-butyllithium; 1,4-dilithiobutane, phenyllithium, stilbenelithium, naphthyllithium, 1,3-bis(1-lithio-1,3-dimethylpentyl)benzene, 1,3-phenylenebis(3-methyl-1-phenylpentylidene)dilithium, naphthylsodium, naphthylpotassium, and ethoxypotassium. Among these, lithium compounds are preferred.

In the above polymerization, a compound having a functional group that interacts with silica (hereinafter, also referred to as "initiator modifier") may be used as the alkali metal compound. By performing polymerization in the presence of an initiator modifier, a functional group that interacts with silica can be introduced into the polymerization initiation terminal of the conjugated diene polymer (A-1). As used herein, "functional group that interacts with silica" means a group having an element that interacts with silica, such as nitrogen, sulfur, phosphorus, or oxygen. "Interaction" means forming a covalent bond between molecules, or forming an intermolecular force weaker than a covalent bond (e.g., an electromagnetic force acting between molecules, such as ion-dipole interaction, dipole-dipole interaction, hydrogen bond, or van der Waals force).

The initiator modifier is preferably a nitrogen-containing alkali metal compound. Among them, a mixture of a

nitrogen-free alkali metal compound and a secondary amine compound is mentioned. In the mixture, examples of the secondary amine compound include linear or cyclic secondary amine compounds such as dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl) amine, diallylamine, morpholine, N-(trimethylsilyl)piperazine, N-(tert-butyldimethylsilyl)piperazine, 1,3-ditrimethylsilyl-1,3,5-triazinane, N-trimethylsilylpiperazine, 1,3,3-trimethyl-6-azabicyclo[3.2.1]octane, and 1-propyl-3-azabicyclo [3.2.2]nonane. As the nitrogen-free alkali metal compound, alkyllithium is preferably used.

When performing polymerization in the presence of the above mixture, the nitrogen-free alkali metal compound and the secondary amine compound may be premixed, and the mixture may be added to the polymerization system to perform polymerization. Alternatively, the nitrogen-free alkali metal compound and the secondary amine compound may be added to the polymerization system, and both may be mixed in the polymerization system to perform polymerization. By performing polymerization in the presence of a mixture of a nitrogen-free alkali metal compound and a secondary amine compound, a nitrogen-containing group can be introduced into the main chain terminal of the conjugated diene polymer (A-1).

The amount of the polymerization initiator used (or total amount if two or more are used) is preferably 0.01 to 20 mmol, and more preferably 0.05 to 15 mmol, per 100 g of monomers used for the synthesis of the conjugated diene polymer (A-1). The usage ratio of the initiator modifier may be 10 mol% to 100 mol% with respect to the total amount of the polymerization initiator (preferably an alkali metal compound) used for the polymerization of the monomers described above.

A randomizer can be used for purposes such as adjusting the vinyl bond content, which represents the content of vinyl bonds in the polymer, and adjusting the content ratios of the segment comprising isolated aromatic vinyl compound units and the segment comprising a long sequence of consecutive aromatic vinyl compound units. Examples of randomizers include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, tetramethylethylenediamine; and at least one potassium salt selected from the group consisting of potassium alkoxide, potassium phenoxide, potassium salt of organic carboxylic acid, potassium salt of organic sulfonic acid, and potassium salt of organic phosphite partial ester. The randomizers exemplified above can be used alone or in combination of two or more. Among them, it is preferred to use a potassium salt, and it is more preferred to use a combination of a potassium salt and the randomizer other than potassium salt.

The organic solvent used for polymerization may be any organic solvent inert to the reaction. For example, aliphatic hydrocarbons, alicyclic hydrocarbons, and aromatic hydrocarbons can be used. Among these, hydrocarbons having 3 to 8 carbon atoms are preferred, and specific examples thereof include propane, n-butane, isobutane, n-pentane, isopentane, n-hexane, cyclohexane, propene, 1-butene, isobutene, trans-2-butene, cis-2-butene, 1-pentyne, 2-pentyne, 1-hexene, 2-hexene, benzene, toluene, xylene, ethylbenzene, heptane, cyclopentane, methylcyclopentane, methylcyclohexane, 1-pentene, 2-pentene, and cyclohexene. The organic solvents can be used alone or in combination of two or more.

When solution polymerization is employed, the monomer concentration in the reaction solvent is preferably 5 to 50% by mass, and more preferably 10 to 30% by mass, from the viewpoint of maintaining a balance between productivity and ease of polymerization control. The temperature of the polymerization reaction is preferably -20°C to 150°C, and more preferably 0°C to 120°C. Further, the polymerization reaction is preferably carried out under a pressure sufficient to keep the monomers substantially in the liquid phase. Such pressure can be obtained by methods such as pressurizing the inside of the reactor with a gas inert to the polymerization reaction.

By such a polymerization reaction, a conjugated diene polymer having active terminals can be obtained. The weight average molecular weight (Mw) of the obtained conjugated diene polymer in terms of polystyrene, as measured by gel permeation chromatography (GPC), is preferably $5.0 \times 10^4$ to $1.0 \times 10^6$. If Mw is less than $5.0 \times 10^4$, the tensile strength, low heat build-up property, and abrasion resistance of the cross-linked polymer tend to decrease, and if it is more than $1.0 \times 10^6$, the processability of the polymer composition obtained using the conjugated diene polymer tends to decrease. More preferably, Mw is $8.0 \times 10^4$ to $9.0 \times 10^6$, and still more preferably, Mw is $1.0 \times 10^5$ to $8.0 \times 10^5$.

Regarding the conjugated diene polymer having active terminals, the vinyl bond content in butadiene units (hereinafter, also referred to as "vinyl content") is preferably 10% by mass or more, more preferably 20% by mass or more, and still more preferably 30% by mass or more. Further, the vinyl content is preferably 70% by mass or less, more preferably 68% by mass or less, and still more preferably 65% by mass or less. If the vinyl content is 10% by mass or more, the grip performance tends to increase, and if the vinyl content is 70% by mass or less, the abrasion resistance of the obtained vulcanized rubber tends to increase. As used herein, "vinyl content" refers to the content ratio of structural units having 1,2-bonds with respect to all structural units of butadiene in the conjugated diene polymer, and is a value measured by $^1$H-NMR.

<Modification Step>

The method of producing the conjugated diene polymer (A-1) may include a modification step in addition to said polymerization step. In this step, the active terminals of the conjugated diene polymer obtained in the above polymerization step are reacted with a compound having a hydrocarbyloxysilyl group. By such a reaction, a conjugated diene polymer having a hydrocarbyloxysilyl group can be obtained. As used herein, "active terminal" refers to a portion constituting a carbon-metal bond existing at the end of a molecular chain (more specifically, a carbanion).

The compound having a hydrocarbyloxysilyl group is preferably a compound having both a nitrogen-containing group and a hydrocarbyloxysilyl group in one molecule (hereinafter, also referred to as "termination modifier"). As the termination modifier, an amino group-containing alkoxysilane compound, an imino group-containing alkoxysilane compound, an imidazolyl group-containing alkoxysilane compound, an alkoxysilane compound having an azasilolidine structure, and the like can be used. Examples of the amino group-containing alkoxysilane compound include N,N-bis(trimethylsilyl)aminopropylmethyldimethoxysilane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, and N,N-bis(trimethylsilyl)aminoethylmethyldiethoxysilane.

Other examples of the amino group-containing alkoxysilane compound include tris(2-triethoxysilylethyl)amine, tris(3-triethoxysilylpropyl)amine, tris(5-triethoxysilylpentyl)amine, N,N,N',N'-tetra(2-triethoxysilylethyl)-1,2-diaminoethane, N,N,N',N'-tetra(3-triethoxysilylpropyl)-1,3-diaminopropane, and N,N,N-tris(triethoxysilyl)propylamine, as well as compounds obtained by replacing the alkyl group and alkanediyl group in these compounds with alkyl groups having 1 to 6 carbon atoms and alkanediyl groups having 1 to 6 carbon atoms, respectively.

Other examples of imino group-containing alkoxysilanes include N-(1,3-dimethylbutylidene)-3-(triethoxysilyl)-1-propanamine, N-(1-methylpropylidene)-3-(triethoxysilyl)-1-propanamine, N-(4-N,N-dimethylaminobenzylidene)-3-(triethoxysilyl)-1-propanamine, N-(cyclohexylidene)-3-(triethoxysilyl)-1-propanamine, and trimethoxysilyl compounds, methyldiethoxysilyl compounds, ethyldimethoxysilyl compounds corresponding to these triethoxysilyl compounds, 3-hexamethyleneiminopropyltrimethoxysilane, and 3-hexamethyleneiminopropylmethyldimethoxysilane, as well as compounds obtained by replacing the alkyl groups and alkylene groups in the above compounds with alkyl groups having 1 to 6 carbon atoms and alkylene groups having 1 to 6 carbon atoms, respectively.

Other examples of imidazolyl group-containing alkoxysilanes include N-(3-trimethoxysilylpropyl)-4,5-dihydroimidazole, N-(3-triethoxysilylpropyl)-4,5-dihydroimidazole, N-(3-trimethoxysilylpropyl)-4,5-imidazole, N-(3-triethoxysilylpropyl)-4,5-imidazole, and N,N-bis(triethoxysilylpropyl)aminopropyl-1-imidazole, as well as compounds obtained by replacing the alkyl groups and alkanediyl groups in the above compounds with alkyl groups having 1 to 6 carbon atoms and alkanediyl groups having 1 to 6 carbon atoms, respectively.

Examples of the alkoxysilane compound having an azasilolidine structure include 1-trimethylsilyl-2,2-dimethoxy-1-aza-2-silacyclopentane, 1-triethylsilyl-2,2-diethoxy-1-aza-2-silacyclopentane, 2,2-dimethoxy-1-(3-trimethoxysilylpropyl)-1,2-azasilolidine, 2,2-dimethoxy-1-phenyl-1,2-azasilolidine, and 2-(2,2-dimethoxy-1,2-azasilolidin-1-yl)-N,N-diethylethane-1-amine.

As for the termination modifier, one of these may be used alone, or two or more of these may be used in combination.

The reaction between the polymerization active terminal and the termination modifier is preferably carried out as a solution reaction. This solution reaction may be carried out using a solution containing unreacted monomers after the completion of the polymerization reaction, or may be carried out after isolating the conjugated diene polymer contained in the solution and dissolving it in an appropriate solvent such as cyclohexane. Further, the above reaction may be carried out using either a batch method or a continuous method. At this time, the method for adding the termination modifier is not particularly limited, and examples include a method of adding it all at once, a method of adding it in portions, and a method of adding it continuously.

The amount of the termination modifier used in said reaction may be appropriately set according to the type of the compound used in the reaction, but is preferably 0.1 molar equivalents or more, and more preferably 0.3 molar equivalents or more, with respect to the metal atoms of the polymerization initiator involved in the polymerization reaction. By setting the amount of the termination modifier used in said reaction to 0.1 molar equivalents or more, the modification reaction can be allowed to proceed sufficiently, and the dispersibility of the filler can be suitably improved. In addition, in order to avoid adding an excessive amount of the termination modifier, the amount of the termination modifier used is preferably 1.5 molar equivalents or less, and more preferably 1.2 mol or less, with respect to the metal atoms of the polymerization initiator involved in the polymerization reaction.

The temperature of said reaction is usually the same as the temperature of the polymerization reaction, is preferably from -20°C to 150°C, and more preferably from 0°C to 120°C. If the reaction temperature is too low, the viscosity of the modified conjugated diene polymer tends to increase. On the other hand, if the reaction temperature is too high, the polymerization active terminals are prone to deactivation. The reaction time is preferably 1 minute to 5 hours, and more

preferably 2 minutes to 1 hour.

Note that, when producing the conjugated diene polymer, a process of reacting the polymerization active terminals with a coupling agent may be performed for purposes such as increasing the Mooney viscosity and cold flow properties of the polymer. The reaction between the polymerization active terminals and the coupling agent is hereinafter also referred to as a "coupling reaction". The reaction using a coupling agent may be performed before or after the reaction between the polymerization active terminals and the termination modifier, or may be performed simultaneously with the reaction between the polymerization active terminals and the termination modifier. Alternatively, only a coupling agent may be used without using a termination modifier. Examples of the coupling agent include 2,4-tolylene diisocyanate, diphenylmethane diisocyanate, N,N,N',N'-tetramethylphthalamide, tetrachlorosilane, N,N,N',N'-tetramethyl-4,4'-diaminobenzophenone, and tetrachlorotin.

In addition, when a compound having a protecting group (such as a trimethylsilyl group) is used as the termination modifier, a polymer obtained by replacing part or all of the protecting groups with hydrogen on the conjugated diene polymer having a protecting group derived from the termination modifier may be used as the conjugated diene polymer in subsequent steps. Furthermore, when a protecting group-containing compound is used as the termination modifier, the conjugated diene polymer modified by the termination modifier may be further reacted with an onium salt-forming agent. In this case, a polymer having an onium salt structure at a polymer terminal can be obtained as the conjugated diene polymer. It is preferable for the conjugated diene polymer to have an onium salt structure so that the shape retention of a cured product obtained using the polymer composition can be improved.

The conjugated diene polymer contained in the reaction solution can be isolated by, for example, a known desolvation method such as steam stripping, and a drying operation such as a heat treatment. The weight average molecular weight (Mw) of the conjugated diene polymer in terms of polystyrene, as measured by gel permeation chromatography (GPC), is preferably $1.0 \times 10^5$ or more. If the Mw is less than $1.0 \times 10^5$, the shape stability, tensile strength, and abrasion resistance of the cross-linked product tend to decrease. The Mw of the conjugated diene polymer is more preferably $1.2 \times 10^5$ or more, and still more preferably $1.5 \times 10^5$. In addition, the Mw of the conjugated diene polymer is preferably $1.5 \times 10^6$ or less. If the Mw is greater than $1.5 \times 10^6$, the processability of the polymer composition tends to decrease. The Mw of the conjugated diene polymer is more preferably $1.3 \times 10^6$ or less, and still more preferably $1.0 \times 10^6$ or less.

As described above, the conjugated diene polymer A-1 can be obtained by a method including the <Polymerization Step>. In addition, by using an initiator modifier in the <Polymerization Step>, a conjugated diene polymer A-1 having a nitrogen-containing group can be obtained. Furthermore, by performing the <Modification Step>, a conjugated diene polymer A-1 having a nitrogen-containing group and a hydrocarbyloxysilyl group can be obtained.

(Other Rubber Components)

Other rubber components are not particularly limited as long as they do not satisfy the conditions for the above-mentioned conjugated diene polymer (A-1). Examples of the other rubber components include butadiene rubber (BR, for example, high-cis BR having a cis-1,4 bond content of 90% or more), emulsion-polymerized or solution-polymerized styrene-butadiene rubber (SBR), styrene-isoprene-butadiene rubber, styrene-isoprene rubber, partially hydrogenated styrene-butadiene rubber, styrene-alpha-methylstyrene-butadiene rubber, ethylene-propylene-diene rubber, natural rubber (NR), isoprene rubber (IR), isoprene-butadiene rubber, halogenated isoprene rubber, liquid rubber, ethylene-propylene rubber (EPM), ethylene-propylene-diene rubber (EPDM), and silicone rubber.

Examples of the liquid rubber include liquid polyisoprene (liquid IR), liquid polybutadiene (liquid BR), liquid styrene-butadiene copolymer (liquid SBR), and liquid ethylene-propylene copolymer (liquid EP). For example, a liquid SBR having a weight average molecular weight of 1,000 to 100,000, and preferably 2,000 to 80,000, can be used. The weight average molecular weight as used herein means the weight average molecular weight in terms of polystyrene, as analyzed by gel permeation chromatography (GPC). The liquid rubber used in the present disclosure refers to one that has fluidity at 23°C.

The amount of other rubber components can be appropriately adjusted according to the amount of the conjugated diene polymer (A-1). For example, the amount of other rubber components, with respect to the total amount of the rubber components, is preferably 95% by mass or less, more preferably 90% by mass or less, and still more preferably 85% by mass or less; and may be 0% by mass, may be 5% by mass or more, or may be 10% by mass or more.

The amount of the rubber component is, with respect to the total amount of the polymer composition, preferably 20% by mass or more and 70% by mass or less, more preferably 25% by mass or more and 65% by mass or less, and still more preferably 30% by mass or more and 60% by mass or less. When the amount of the rubber component is within said numerical range, a tire having high grip performance and high abrasion resistance can be produced.

(Polymer of a Raw Material Component)

The polymer of a raw material component used in the polymer composition is at least one selected from the group consisting of a polymer of a raw material component containing a C5 fraction containing an aliphatic olefin, and a polymer of a raw material component containing a C9 fraction containing an aromatic olefin and a C5 fraction containing an aliphatic olefin. As used herein, "polymer of a raw material component" refers to a polymer obtained by polymerizing raw material components (such as a C5 fraction containing an aliphatic olefin). By using such a polymer of a raw material component, a tire having high grip performance and high abrasion resistance can be produced.

The C5 fraction containing an aliphatic olefin is generally a fraction having a boiling point range of about 20 to 110°C among the fractions obtained by thermal decomposition of petroleum (such as naphtha), and mainly contains compounds having 4 to 5 carbon atoms. Examples of the aliphatic olefin in the C5 fraction include piperylene, isoprene, 1-pentene, 2-pentene, 2-methyl-1-butene, 2-methyl-2-butene, 3-methyl-1-butene, 1,2-pentadiene, and 3-methyl-1,2-butadiene, and two or more types may be included.

The C9 fraction containing an aromatic olefin is generally a fraction having a boiling point range of about 100 to 280°C among the fractions obtained by thermal decomposition of petroleum (such as naphtha), and mainly contains compounds having 8 to 10 carbon atoms. Examples of the aromatic olefin in the C9 fraction include vinyltoluene, alpha-methylstyrene, styrene, indene, and methylindene, and two or more types may be included.

The raw material components may further contain other components other than the C5 fraction containing an aliphatic olefin and the C9 fraction containing an aromatic olefin. The other components include non-polymerizable hydrocarbons that have no polymerizable group and do not participate in the polymerization. Examples of the non-polymerizable hydrocarbons include saturated hydrocarbons (such as alkanes and cycloalkanes) and aromatic hydrocarbons (such as benzene, methylethylbenzene, and toluene).

The method of polymerizing the raw material components is not particularly limited and can be carried out by a conventionally known method. Examples of the polymerization method include thermal polymerization and cationic polymerization, and thermal polymerization is preferable.

The reaction temperature of the thermal polymerization is not particularly limited, but is, for example, preferably 250°C or more and 300°C or less, and more preferably 260°C or more and 290°C or less.

The reaction time of the thermal polymerization is not particularly limited, but is, for example, preferably 1 hour or more and 10 hours or less, more preferably 2 hours or more and 7 hours or less, and still more preferably 3 hours or more and 5 hours or less.

The number average molecular weight (Mn) of the polymer of a raw material component is not particularly limited, but is, for example, preferably 300 g/mol or more and less than 3000 g/mol, more preferably 400 g/mol or more, still more preferably 500 g/mol or more, even more preferably 600 g/mol or more, even more preferably 700 g/mol or more; and is also more preferably 2500 g/mol or less, still more preferably 2000 g/mol or less, even more preferably 1700 g/mol or less, particularly preferably 1500 g/mol or less, and most preferably 1300 g/mol or less.

When the number average molecular weight (Mn) of the polymer of a raw material component is within said numerical range, the compatibility with the rubber component improves, and the viscoelastic properties, which are indicators of high grip performance, become favorable.

Note that the number average molecular weight (Mn) of the polymer of a raw material component can be measured by a conventionally known method of gel permeation chromatography (GPC) analysis. In the present invention, the Mn is the value as measured by the method described in the Examples below.

The proton amount per molecule of the polymer of a raw material component preferably satisfies the following conditions:

$0 \leq$ aromatic proton amount $\leq 95$; and
$0 \leq$ olefin proton amount $\leq 90$, more preferably satisfies the following conditions:
$0 \leq$ aromatic proton amount $\leq 80$; and
$0 \leq$ olefin proton amount $\leq 50$, still more preferably satisfies the following conditions:
$0 \leq$ aromatic proton amount $\leq 50$; and
$0 \leq$ olefin proton amount $\leq 30$, and particularly preferably satisfies the following conditions:
$0 \leq$ aromatic proton amount $\leq 20$; and
$0 \leq$ olefin proton amount $\leq 10$.

If the proton amount per molecule of the polymer of a raw material component satisfies said conditions, the compatibility with the rubber component improves, and the viscoelastic properties, which are indicators of high grip performance, become favorable.

Note that the proton amount per molecule of the polymer of a raw material component can be measured by conventionally known $^1$H NMR. In the present invention, the proton amount is the value as measured by the method

described in the Examples below.

The polymer of a raw material component may be hydrogenated. The method for the hydrogenation of the polymer of a raw material component is not particularly limited, and can be carried out by a conventionally known method. The hydrogenation method can be carried out, for example, by contacting the polymer of a raw material component with a hydrogenation catalyst in the presence of molecular hydrogen.

The hydrogenation catalyst is not particularly limited, and examples include nickel-based catalysts, molybdenum-based catalysts, cobaltbased catalysts, palladium-based catalysts, and platinum-based catalysts.

The reaction temperature of the hydrogenation is not particularly limited, but is, for example, preferably 150°C or more and 320°C, and more preferably 160°C or more and 300°C or less.

The reaction pressure of the hydrogenation is not particularly limited, but is, for example, preferably 2 MPa or more and 30 MPa or less, and more preferably 3 MPa or more and 25 MPa or less.

The reaction time of the hydrogenation is not particularly limited, but is, for example, preferably 1 hour or more and 10 hours or less, more preferably 2 hours or more and 7 hours or less, and still more preferably 3 hours or more and 5 hours or less.

(Other Resins)

The polymer composition may further contain other resins other than the polymer of a raw material component. Examples of the other resins include rosin-based resins, terpene-based resins, coumarone-based resins, and phenolic resins.

(Filler)

Examples of the filler include silica, carbon black, inorganic compounds represented by the following formula (2) (hereinafter also referred to as "inorganic compounds (M)"), reinforcing fibers (for example, inorganic fibers such as glass fibers and carbon fibers, and organic fibers such as nylon and polyester), and barium sulfate. Among these, it is preferable to use at least one selected from the group consisting of silica, carbon black, and the inorganic compounds (M).

$$nM^1 \cdot mSiO_k \cdot iH_2O... \qquad (2)$$

(In formula (2), $M^1$ is at least one selected from the group consisting of a specific metal that is any of aluminum, magnesium, titanium, and calcium, an oxide of the specific metal, a hydroxide of the specific metal, a hydrated oxide of the specific metal, and a hydrated hydroxide of the specific metal; n is an integer of 1 to 5, m is an integer of 0 to 10, k is an integer of 2 to 5, and i is an integer of 0 to 10.)

(Silica)

The silica is not particularly limited, but examples include dryprocess silica, wet-process silica, colloidal silica, and precipitated silica. Among these, wet-process silica containing hydrated silica as a main component is preferable. These silicas can be used alone or in a combination of two or more. In addition, the BET specific surface area of the silica (measured according to ISO 5794/1) is preferably in the range of 40 to 350 $m^2/g$, more preferably in the range of 80 to 300 $m^2/g$, and particularly preferably in the range of 120 to 250 $m^2/g$. Silica having a BET specific surface area within this range has the advantage that a balance between rubber-reinforcing properties and dispersibility into the conjugated diene polymer (A-1) can be achieved. As such silica, commercially available products can be used, such as product name "NIPSIL AQ" (BET specific surface area = 205 $m^2/g$) and "NIPSIL KQ" manufactured by Tosoh Silica Corporation, and product name "ULTRASIL VN3" (BET specific surface area = 175 $m^2/g$) manufactured by Degussa.

The silica contained in the polymer composition may be a combination of two or more types having different specific surface areas. Specifically, a combination of a first silica having a CTAB (cetyltrimethylammonium bromide) specific surface area of 180 $m^2/g$ or more, a BET specific surface area of 185 $m^2/g$ or more, and an aggregate size of 45 nm or more, and a second silica having a CTAB specific surface area of 95 $m^2/g$ or less and a BET specific surface area of 100 $m^2/g$ or less may be used. Note that the CTAB specific surface area of silica is measured according to ASTM D3765-92.

The polymer composition may contain a first silica having a CTAB specific surface area of 180 $m^2/g$ or more, a BET specific surface area of 185 $m^2/g$ or more, and an aggregate size of 45 nm or more, and a second silica having a CTAB specific surface area of 95 $m^2/g$ or less and a BET specific surface area of 100 $m^2/g$ or less. By using such a first silica and second silica in combination, it becomes possible to favorably disperse the first silica, which has a small average primary particle size but a relatively large aggregate size, in the rubber component. By this means, the dispersibility of the silica can be improved, and excellent rubber fracture strength, abrasion resistance, low fuel consumption properties, and processability can be obtained.

The CTAB specific surface area of the first silica is preferably 190 $m^2/g$ or more, more preferably 195 $m^2/g$ or more, and still more preferably 197 $m^2/g$ or more. When the CTAB specific surface area is 190 $m^2/g$ or more, a sufficient improvement in rubber fracture strength and abrasion resistance tends to be more easily obtained. The CTAB specific surface area of the first silica is preferably 350 $m^2/g$ or less, more preferably 300 $m^2/g$ or less, and still more preferably 250 $m^2/g$ or less. When the CTAB specific surface area is 350 $m^2/g$ or less, the first silica has excellent dispersibility and is difficult to agglomerate, and therefore tends to easily maintain its physical properties.

The BET specific surface area of the first silica is preferably 190 $m^2/g$ or more, more preferably 195 $m^2/g$ or more, and still more preferably 210 $m^2/g$ or more. When the BET specific surface area is 190 $m^2/g$ or more, a sufficient improvement in rubber fracture strength and abrasion resistance tends to be more easily obtained. The BET specific surface area of the first silica is preferably 350 $m^2/g$ or less, more preferably 300 $m^2/g$ or less, and still more preferably 260 $m^2/g$ or less. When the BET specific surface area is 350 $m^2/g$ or less, the first silica has excellent dispersibility and is difficult to agglomerate, and therefore tends to easily maintain its physical properties. Note that the BET specific surface area of silica is measured according to ASTM D3037-81.

The aggregate size of the first silica is 45 nm or more, preferably 50 nm or more, more preferably 55 nm or more, and still more preferably 60 nm or more. In addition, the aggregate size of the first silica is preferably 100 nm or less, more preferably 80 nm or less, still more preferably 70 nm or less, and particularly preferably 67 nm or less. By having such an aggregate size, it is possible to impart excellent low fuel consumption properties and abrasion resistance while having good dispersibility (processability). Note that the aggregate size of the silica can be measured by the method described in JP-A 2011-140613.

The average primary particle size of the first silica is preferably 25 nm or less, more preferably 22 nm or less, still more preferably 17 nm or less, and particularly preferably 14 nm or less. The lower limit of the average primary particle size of the first silica is not particularly limited, but is preferably 3 nm or more, more preferably 5 nm or more, and still more preferably 7 nm or more. The first silica has such a small average primary particle size, but due to a structure like that of carbon black having the above-mentioned aggregate size, the dispersibility (processability) of the silica can be further improved, and the low fuel consumption properties and abrasion resistance can be further improved. Note that the average primary particle size of the silica can be determined by observing the silica with a transmission or scanning electron microscope, measuring the particle size for 400 or more primary particles of silica observed within the field of view, and taking the average thereof.

The CTAB specific surface area of the second silica is preferably 10 $m^2/g$ or more, more preferably 20 $m^2/g$ or more, and still more preferably 30 $m^2/g$ or more. If the CTAB specific surface area is 10 $m^2/g$ or more, the reinforcing property increases, making it easier to ensure the mechanical strength and the abrasion resistance required for a polymer composition used in tire manufacturing. The CTAB specific surface area of the second silica is preferably 80 $m^2/g$ or less, more preferably 60 $m^2/g$ or less, and still more preferably 50 $m^2/g$ or less. If the CTAB specific surface area is 80 $m^2/g$ or less, the dispersibility of the silica improves, making it easier to improve the rubber fracture strength and the abrasion resistance.

The BET specific surface area of the second silica is preferably 10 $m^2/g$ or more, more preferably 20 $m^2/g$ or more, and still more preferably 30 $m^2/g$ or more. If the BET specific surface area is 10 $m^2/g$ or more, the reinforcing property increases, making it easier to ensure the mechanical strength and abrasion resistance required for a polymer composition used in tire manufacturing. The BET specific surface area of the second silica is preferably 85 $m^2/g$ or less, more preferably 60 $m^2/g$ or less, and still more preferably 50 $m^2/g$ or less. If the BET specific surface area is 85 $m^2/g$ or less, the dispersibility of the silica improves, making it easier to improve the rubber fracture strength and the abrasion resistance.

The average primary particle size of the second silica is preferably 20 nm or more, more preferably 25 nm or more, still more preferably 30 nm or more, particularly preferably 35 nm or more, and most preferably 55 nm or more. In addition, the upper limit of the average primary particle size of the second silica is not particularly limited, but is preferably 500 nm or less, more preferably 200 nm or less, still more preferably 100 nm or less, and particularly preferably 70 nm or less. By having such an average primary particle size, the rubber fracture strength and abrasion resistance can be improved.

(Carbon Black)

The carbon black is not particularly limited, and examples include GPF, FEF, HAF, ISAF, and SAF grade carbon blacks. The nitrogen adsorption specific surface area ($N_2SA$) of said carbon black is not particularly limited, but from the viewpoint of achieving more excellent effects of the present disclosure, is preferably 50 to 200 $m^2/g$, and more preferably 70 to 150 $m^2/g$. The nitrogen adsorption specific surface area ($N_2SA$) is a value measured by measuring the amount of nitrogen adsorbed on the surface of the carbon black according to JIS K6217-2:2001, "Part 2: Determination of specific surface area by nitrogen adsorption methods - Single-point procedures." The carbon black may be used alone or in combination of two or more. The amount of the carbon black added is preferably in the range of 1 to 150 parts by mass, and more preferably in the range of 5 to 120 parts by mass, per 100 parts by mass of the rubber component.

(Inorganic Filler)

Specific examples of the inorganic compound (M) include: compounds in which the specific metal is aluminum, such as aluminum oxide, alumina monohydrate, aluminum hydroxide, aluminum carbonate, aluminum silicate, and calcium aluminum oxide (such as $Al_2O_3 \cdot CaO \cdot 2SiO_4$); compounds in which the specific metal is magnesium, such as magnesium oxide, magnesium hydroxide, magnesium carbonate, magnesium silicate, calcium magnesium silicate ($CaMgSiO_4$), and talc; compounds in which the specific metal is titanium, such as titanium oxide; and compounds in which the specific metal is calcium, such as calcium oxide, calcium hydroxide, calcium carbonate, and calcium silicate.

The total amount of the filler is preferably 10 parts by mass or more and 200 parts by mass or less, more preferably 30 parts by mass or more and 150 parts by mass, and still more preferably 50 parts by mass or more and 120 parts by mass or less, per 100 parts by mass of the rubber component.

(Silane Coupling Agent)

When silica is added, it is preferable to add a silane coupling agent. As the silane coupling agent, a known silane coupling agent can be used. Examples include bis[3-(triethoxysilyl)propyl] tetrasulfide, bis[3-(triethoxysilyl)propyl] disulfide, 3-[ethoxybis(3,6,9,12,15-pentaoxaoctacosan-1-yloxy)silyl]-1-propanethiol, 3-mercaptopropyltrimethoxysilane, 3-octanoylthio-1-propyltriethoxysilane, and its self-condensate or a co-condensate thereof with 3-mercaptopropyltriethoxysilane. As for bis[3-(triethoxysilyl)propyl] tetrasulfide, a commercially available product may be used, and an example is Si-69 manufactured by Evonik Industries AG. In addition, as for bis[3-(triethoxysilyl)propyl] disulfide, a commercially available product may be used, and an example is Si-75 manufactured by Evonik Industries AG. In addition, as for 3-[ethoxybis(3,6,9,12,15-pentaoxaoctacosan-1-yloxy)silyl]-1-propanethiol, a commercially available product may be used, and an example is Si-363 manufactured by Evonik Industries AG. In addition, as for 3-mercaptopropyltrimethoxysilane, a commercially available product may be used, and an example is KBM803 manufactured by Shin-Etsu Chemical Co., Ltd. In addition, as for 3-octanoylthio-1-propyltriethoxysilane, a commercially available product may be used, and an example is NXT-Silane manufactured by Momentive Performance Materials Inc. In addition, as for the condensate of 3-octanoylthio-1-propyltriethoxysilane, a commercially available product may be used, and an example is NXT-Z45 silane manufactured by Momentive Performance Materials Inc. These silane coupling agents may be used alone or in combination of two or more. The amount of the silane coupling agent is preferably 1 part by mass or more and 30 parts by mass or less, and more preferably 2 parts by mass or more and 20 parts by mass or less, per 100 parts by mass of silica.

(Other Additives)

The polymer composition of the present invention may contain other additives such as a vulcanizing agent, a vulcanization accelerator, a vulcanization acceleration aid, an antidegradant, a softening agent, an antioxidant, and a colorant, to the extent that its functions are not impaired.

Examples of the vulcanizing agent include sulfur-based vulcanizing agents such as powdered sulfur, precipitated sulfur, highly dispersible sulfur, surface-treated sulfur, insoluble sulfur, dimorpholine disulfide, and alkylphenol disulfide; and zinc oxide, magnesium oxide, litharge, p-quinonedioxime, p-dibenzoylquinonedioxime, tetrachloro-p-benzoquinone, poly-p-dinitrobenzene, methylenedianiline, phenolic resins, brominated alkylphenol resins, and chlorinated alkylphenol resins. The amount of the vulcanizing agent is preferably 0.1 parts by mass or more and 10 parts by mass or less, and more preferably 1 part by mass or more and 5 parts by mass or less, per 100 parts by mass of the rubber component.

Examples of the vulcanization accelerator include thiuram-based compounds such as tetramethylthiuram disulfide (TMTD), tetraethylthiuram disulfide (TETD), and tetramethylthiuram monosulfide (TMTM); aldehyde-ammonia-based compounds such as hexamethylenetetramine; guanidine-based compounds such as diphenylguanidine (DPG); thiazole-based compounds such as 2-mercaptobenzothiazole (MBT) and dibenzothiazyl disulfide (DM); sulfenamide-based compounds such as N-cyclohexyl-2-benzothiazylsulfenamide (CBS) and N-t-butyl-2-benzothiazylsulfenamide (BBS); and dithiocarbamate-based compounds such as zinc dimethyldithiocarbamate (ZnPDC). The amount of the vulcanization accelerator is preferably 0.1 parts by mass or more and 10 parts by mass or less, and more preferably 1 part by mass or more and 5 parts by mass or less, per 100 parts by mass of the rubber component.

Examples of the vulcanization acceleration aid include fatty acids, zinc fatty acids, fatty acid zinc salts, and zinc oxide. As the fatty acid, acetic acid, propionic acid, butanoic acid, stearic acid, acrylic acid, maleic acid, and the like can be used. As the zinc fatty acid, zinc acetate, zinc propionate, zinc butyrate, zinc stearate, zinc acrylate, zinc maleate, and the like can be used. As the fatty acid zinc salt, a salt of said zinc fatty acid can be used. The amount of the vulcanization accelerator is preferably 0.1 parts by mass or more and 10 parts by mass or less, and more preferably 1 part by mass or more and 5 parts by mass or less, per 100 parts by mass of the rubber component.

Examples of the antidegradant include compounds such as aliphatic and aromatic hindered amine-based compounds and hindered phenolbased compounds. The amount of the antidegradant is preferably 0.1 parts by mass or

more and 10 parts by mass or less, and more preferably 1 part by mass or more and 5 parts by mass or less, per 100 parts by mass of the rubber component.

Examples of the antioxidant include butylated hydroxytoluene (BHT) and butylated hydroxyanisole (BHA). The amount of the antioxidant is preferably 0.1 parts by mass or more and 10 parts by mass or less, and more preferably 1 part by mass or more and 5 parts by mass or less, per 100 parts by mass of the rubber component.

As the softening agent, a conventionally known one can be used and is not particularly limited, and examples include petroleum-based softening agents such as aroma oil, paraffin oil, and naphthene oil; and plant-based softening agents such as palm oil, castor oil, cottonseed oil, and soybean oil. At the time of use, one or a combination of two or more may be appropriately selected from them and used. When a softening agent is contained, from the viewpoint of ease of handling, it is preferable to contain, from among the above-mentioned softening agents, one that is liquid at room temperature such as 25°C, for example, a petroleum-based softening agent such as aroma oil, paraffin oil, or naphthene oil, and aroma oil is particularly preferable. The amount of the softening agent is preferably 10 parts by mass or more and 200 parts by mass or less, and more preferably 20 parts by mass or more and 100 parts by mass or less, per 100 parts by mass of the rubber component.

Examples of the colorant include inorganic pigments such as titanium dioxide, zinc oxide, ultramarine blue, red iron oxide, lithopone, lead, cadmium, iron, cobalt, aluminum, hydrochlorides, and sulfates; azo pigments; and copper phthalocyanine pigments. The amount of the colorant is preferably 0.1 parts by mass or more and 10 parts by mass or less, and more preferably 1 part by mass or more and 5 parts by mass or less, per 100 parts by mass of the rubber component.

The other additives can be kneaded with the rubber component in a known rubber kneader, such as a roll, a Banbury mixer, or a kneader, and then vulcanized under arbitrary conditions to be used as the polymer composition. The amount of the other additives to be added can be a conventional, general amount, without impairing the object of the present invention.

[Method of Producing Polymer Composition]

The method of producing the polymer composition of the present invention comprises at least a step of kneading said rubber component and said polymer of a raw material component. The method of producing the polymer composition may preferably further comprise a step of kneading said vulcanizing agent. More preferably, the method may further comprise a step of kneading said vulcanizing agent and said vulcanization accelerator.

In addition, the method of producing the polymer composition can include appropriately mixing and kneading said other additives, to the extent that the functions of the polymer composition are not impaired.

For the production of the polymer composition, a conventionally known kneading apparatus can be used, and the kneading temperature, time, mixing order, and the like can be appropriately selected.

[Rubber Product]

Using the polymer composition of the present invention, rubber products can be produced by conventionally known methods and common general technical knowledge widely known to those skilled in the art. Examples of the rubber products include tires, automotive rubber parts other than tires (exterior parts, interior parts, weather strips, boots, mounts, seals, sealants, gaskets), hoses, belts, sheets, anti-vibration rubber, rollers, linings, rubber coated fabric, sealing materials, gloves, fenders, medical rubber (syringe gaskets, tubes, catheters), gaskets (for home appliances, for construction), asphalt modifiers, grips, toys, shoes, sandals, keypads, gears, and liners for PET bottle caps. Among these, tires are preferable.

[Tire]

For example, a tire can be produced by extruding the polymer composition, then performing a building step using a tire building machine, and subsequently forming cross-links by heating and pressurizing using a vulcanizer. The shape, structure, size, and material of the tire are not particularly limited and can be appropriately selected according to the purpose. In addition, the use of the tire is not particularly limited, and examples include passenger car tires, heavy-duty tires, motorcycle tires, and studless tires. A tire produced using the polymer composition of the present invention has high grip performance and high abrasion resistance.

The polymer composition of the present invention can be applied to various parts of a tire. The part of the tire to which the polymer composition is applied is not particularly limited, and can be appropriately selected from the tire tread, sidewall, carcass, inner liner, undertread, belt portion, and the like depending on the intended application. Among these, the tire tread and the sidewall are particularly suitable.

EXAMPLES

Hereinafter, the present invention will be specifically described with reference to Examples and Comparative Examples, but the present invention is not limited to these Examples. Note that "parts" and "%" in the Examples and Comparative Examples are on a mass basis unless otherwise specified. The methods of measuring various physical property values of the polymers and rubbers are shown below.

(1) Bound styrene content (%; corresponding to the amount of the structural unit derived from an aromatic vinyl compound): Calculated by $^1$H-NMR measurement at 500 MHz using deuterated chloroform as a solvent.
(2) Content ratio of a segment comprising short aromatic vinyl compound units and (3) Content ratio of a segment comprising a long sequence of consecutive aromatic vinyl compound units: According to the method of Tanaka et al. [Polymer, 22, 1721 (1981)], after decomposing a styrene-butadiene copolymer rubber with ozone, measurement was performed using a gel permeation chromatography (GPC) apparatus "Alliance HPLC" (manufactured by Waters Corporation) under the following conditions. The molecular weight in terms of polystyrene was determined from the retention time corresponding to the peak top (for each peak if multiple peaks were present) in the obtained GPC curve. The number of styrene units corresponding to each peak was then calculated. In addition, from the area ratio of each peak, the content ratio of the segment comprising short aromatic vinyl compound units and the content ratio of the segment comprising a long sequence of consecutive aromatic vinyl compound units were calculated.

(GPC Conditions)

- Column: product name "GPC KF-801" (manufactured by Resonac Corporation) × 2
- Temperature of column: 40°C
- Mobile phase: tetrahydrofuran
- Flow velocity: 0.6 ml/min
- Sample concentration: 0.2 wt%

(4) Vinyl group content (%): Calculated by $^1$H-NMR measurement at 500 MHz.
(5) Weight average molecular weight of the polymer: Measurement was performed under the following conditions using a gel permeation chromatography (GPC) apparatus "HLC-8120GPC" (manufactured by Tosoh Corporation). Based on the retention time corresponding to the maximum peak top of the obtained GPC curve, the weight average molecular weight (Mw) in terms of polystyrene was determined.

(GPC Conditions)

- Column: product name "GMHXL" (manufactured by Tosoh Corporation) × 2
- Temperature of column: 40°C
- Mobile phase: tetrahydrofuran
- Flow velocity: 1.0 ml/min
- Sample concentration: 10 mg/20 ml

(Production Example of Conjugated Diene Polymer (A-1))

(Styrene-Butadiene Rubber (SSBR) 1)

Into a nitrogen-purged autoclave reactor having an internal volume of 5 liters, 2000 g of cyclohexane, 2.5 mL of tetrahydrofuran as a vinyl content modifier, 0.08 mmol of potassium 4-dodecylbenzenesulfonate as a potassium compound, and, 175 g of styrene and 150 g of 1,3-butadiene as polymerization monomers were charged. After the temperature of the contents of the reactor was adjusted to 35°C, 3.7 mmol of n-butyllithium was added as a polymerization initiator to initiate polymerization. When the polymerization conversion reached 20% (corresponding to the point in time when the temperature of the contents reached 45°C), 175 g of 1,3-butadiene (as an additional portion) was added into the reactor over 25 minutes at a constant feed rate. The polymerization was carried out under adiabatic conditions, and the maximum temperature reached 85°C.
When the polymerization conversion reached 99% (35 minutes after the start of polymerization), 3.7 mmol of

3-(N,N-bistrimethylsilyl)aminopropylmethyldiethoxysilane was added as a termination modifier, and the mixture was stirred for 10 minutes. To the stirred polymer solution, 4.40 g of 2,6-di-tert-butyl-p-cresol as an antidegradant was added, followed by desolvation by steam stripping and drying with hot rolls maintained at 130°C, to obtain a modified conjugated diene polymer (hereinafter also simply referred to as "styrene-butadiene rubber (SSBR) 1").

(Styrene-Butadiene Rubber (SSBR) 2)

To a nitrogen-purged autoclave reactor (first reactor) having an internal volume of 50 liters were charged continuously 1,3-butadiene at a rate of 83 g/min and styrene at 28 g/min as monomers, cyclohexane as a solvent at 745 g/min, tetrahydrofuran as a vinyl group content modifier (randomizer) at 1.2 g/min, and n-butyllithium as a polymerization initiator at 55 mg/min, and the temperature inside the reactor was controlled at 75°C. The polymer solution was continuously discharged from the first reactor at a rate of 860 g/min, and to the discharged polymer solution was added the compound represented by the following formula (N-Si-1) at a rate of 115 mg/min, and the mixture was continuously introduced into a second reactor to carry out the reaction. At the outlet of the second reactor, di-tert-butyl-p-cresol was added in an amount of 0.88 parts by mass per 100 parts by mass of the polymer. The polymer solution produced in this manner was subjected to desolvation by steam stripping, followed by drying with hot rolls maintained at 130°C, to obtain a modified conjugated diene polymer (hereinafter also simply referred to as "styrene-butadiene rubber (SSBR) 2").
[Chem. 2]

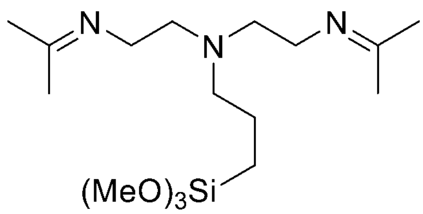

(N-Si-1)

(Styrene-Butadiene Rubber (SSBR) 3)

Into a nitrogen-purged autoclave reactor having an internal volume of 5 liters, 2000 g of cyclohexane, 5.6 mL of tetrahydrofuran as a vinyl content modifier, and 175 g of styrene and 150 g of 1,3-butadiene as polymerization monomers were charged. After the temperature of the contents of the reactor was adjusted to 45°C, 3.7 mmol of n-butyllithium was added as a polymerization initiator to initiate polymerization. When the polymerization conversion reached 20% (corresponding to the point in time when the temperature of the contents reached 60°C), 175 g of 1,3-butadiene (as an additional portion) was added into the reactor over 25 minutes at a constant feed rate. The polymerization was carried out under adiabatic conditions, and the maximum temperature reached 85°C.

When the polymerization conversion reached 99% (35 minutes after the start of polymerization), 3.7 mmol of 3-(N,N-bistrimethylsilyl)aminopropylmethyldiethoxysilane was added as a termination modifier, and the mixture was stirred for 10 minutes. To the stirred polymer solution, 4.40 g of 2,6-di-tert-butyl-p-cresol as an antidegradant was added, followed by desolvation by steam stripping and drying with hot rolls maintained at 130°C, to obtain a modified conjugated diene polymer (hereinafter also simply referred to as "styrene-butadiene rubber (SSBR) 3").

(Styrene-Butadiene Rubber (SSBR) 4)

Into a nitrogen-purged autoclave reactor having an internal volume of 5 liters, 2000 g of cyclohexane, 0.23 mmol of 2,2-di(2-tetrahydrofuryl)propane as a vinyl content modifier, 0.15 mmol of potassium 4-dodecylbenzenesulfonate as a potassium compound, and 125 g of styrene and 200 g of 1,3-butadiene as polymerization monomers were charged. After the temperature of the contents of the reactor was adjusted to 40°C, 3.7 mmol of n-butyllithium was added as a polymerization initiator to initiate polymerization. When the polymerization conversion reached 20% (corresponding to the point in time when the temperature of the contents reached 50°C), 175 g of 1,3-butadiene (as an additional portion) was added into the reactor over 25 minutes at a constant feed rate. The polymerization was carried out under adiabatic conditions, and the maximum temperature reached 85°C. When the polymerization conversion reached 99% (35 minutes after the start of polymerization), 3.7 mmol of 3-(N,N-bistrimethylsilyl)aminopropylmethyldiethoxysilane was added as a termination modifier, and the mixture was stirred for 10 minutes. To the stirred polymer solution, 4.40 g of 2,6-di-tert-butyl-p-cresol as an antidegradant was added, followed by desolvation by steam stripping and drying with hot rolls maintained at 130°C, to obtain a modified conjugated diene polymer (hereinafter also simply referred to as "styrene-butadiene rubber

(SSBR) 4").

(Styrene-Butadiene Rubber (SSBR) 5)

Into a nitrogen-purged autoclave reactor having an internal volume of 5 liters, 2000 g of cyclohexane, 1.5 mL of tetrahydrofuran as a vinyl content modifier, and 100 g of styrene and 180 g of 1,3-butadiene as polymerization monomers were charged. After the temperature of the contents of the reactor was adjusted to 75°C, 3.0 mmol of n-butyllithium was added as a polymerization initiator to initiate polymerization. When the polymerization conversion reached 20% (corresponding to the point in time when reaching 5 minutes after the start of the reaction), 120 g of 1,3-butadiene (as an additional portion) was added into the reactor over 30 minutes at a constant feed rate. The polymerization was carried out under isothermal conditions, and the maximum temperature reached 85°C.

When the polymerization conversion reached 99% (35 minutes after the start of polymerization), 3.0 mmol of 3-(N,N-bistrimethylsilyl)aminopropylmethyldiethoxysilane was added as a termination modifier, and the mixture was stirred for 10 minutes. To the stirred polymer solution, 3.52 g of 2,6-di-tert-butyl-p-cresol as an antidegradant was added, followed by desolvation by steam stripping and drying with hot rolls maintained at 130°C, to obtain a modified conjugated diene polymer (hereinafter also simply referred to as "styrene-butadiene rubber (SSBR) 5").

Details of SSBRs 1-5 obtained above are shown in Table 1 below.

[Table 1]

| | SSBR1 | SSBR2 | SSBR3 | SSBR4 | SSBR5 |
|---|---|---|---|---|---|
| Bound styrene content (%) | 35 | 25 | 35 | 25 | 25 |
| Content ratio of a segment comprising isolated aromatic vinyl compound units | 32 | 83 | 78 | 37 | 82 |
| Content ratio of a segment comprising a long sequence of consecutive aromatic vinyl compound units | 3 | 0 | 0 | 1 | 0 |
| Vinyl group content (%) | 25 | 25 | 25 | 20 | 20 |
| Weight average molecular weight after modification | 359000 | 1080000 | 348000 | 360000 | 357000 |
| Molecular weight distribution after modification | 1.3 | 2.3 | 1.3 | 1.3 | 1.3 |
| Presence of nitrogen-containing groups | present | present | present | present | present |
| Presence of hydrocarbyloxysilyl groups | present | present | present | present | present |

<Preparation of a Polymer of a Raw Material Component>

The following resins 1 to 7 were prepared.

- ·Resin 1 (manufactured by ENEOS Corporation, product name: T-REZ RB100, unhydrogenated aromatic hydrocarbon resin, raw material: a C5 fraction containing an aliphatic olefin)
- ·Resin 2 (manufactured by ENEOS Corporation, product name: T-REZ RB093, unhydrogenated aromatic hydrocarbon resin, raw material: a C5 fraction containing an aliphatic olefin)
- ·Resin 3 (manufactured by ENEOS Corporation, product name: T-REZ RC115, unhydrogenated aromatic hydrocarbon resin, raw material: a C5 fraction containing an aliphatic olefin)
- ·Resin 4 (manufactured by ENEOS Corporation, product name: T-REZ RC100, unhydrogenated aromatic hydrocarbon resin, raw material: a C5 fraction containing an aliphatic olefin)
- ·Resin 5 (manufactured by ENEOS Corporation, product name: T-REZ RC093, unhydrogenated aromatic hydrocarbon resin, raw material: a C5 fraction containing an aliphatic olefin)
- ·Resin 6 (manufactured by ENEOS Corporation, product name: T-REZ RD104, unhydrogenated aromatic hydrocarbon resin, raw material: a C5 fraction containing an aliphatic olefin and a C9 fraction containing an aromatic olefin)
- ·Resin 7 (manufactured by ENEOS Corporation, product name: T-REZ PR802, unhydrogenated aromatic hydrocarbon resin, raw material: a C5 fraction containing an aliphatic olefin and a C9 fraction containing an aromatic olefin)

<Evaluation of Resins>

(Measurement of Number Average Molecular Weight (Mn))

A sample was prepared by dissolving each of the above resins in tetrahydrofuran to a concentration of 10 g/L, and an HLC-8320GPC manufactured by Tosoh Corporation (column used: TSKgel SuperHZ column series) was used for the measurement. From the obtained RI curve, the number average molecular weight Mn was calculated using a calibration curve prepared in advance with a polystyrene kit from Agilent (EasiVial PS-M and PS-L). The calculation results are shown in Table 2.

(Measurement of Proton Amount)

For each of the above resins, the proton amount was measured by the following measurement steps 1 to 3. The measurement results are shown in Table 2.

1. The $^{1}$H NMR was measured for a sample prepared by dissolving 10 mg of a resin and 5.5 mg of a standard substance (dimethyl terephthalate) in 1 g of deuterated chloroform. Note that a standard substance was selected having a peak not overlapping with the aromatic region of the resin.
2. The number of aromatic protons in the sample was quantified by the internal standard method. The sample contains about $2.5 \times 10^{-5}$ mol of dimethyl terephthalate based on the charged amount. When the integral value for the aromatic ring protons (4H) of the internal standard was taken as 1.00, the corresponding proton amount was calculated from the integral values of the olefin region at 4.5-6.0 ppm and the aromatic region at 6.0-7.5 ppm of the resin. In addition, as for the protons derived from the residual deuterated chloroform that overlap with the aromatic region, their influence can be ignored by subtracting a value obtained from a blank measurement performed in advance on a sample without resin.
3. From the Mn of each resin calculated above, the number of aromatic protons contained per molecule was calculated.

[Table 2]

| | Resin 1 | Resin 2 | Resin 3 | Resin 4 | Resin 5 | Resin 6 | Resin 7 |
|---|---|---|---|---|---|---|---|
| Number average molecular weight (Mn) | 1121 | 1049 | 1207 | 923 | 926 | 882 | 760 |
| Aromatic protons (per molecule) | 0.9 | 0.9 | 1.2 | 0.7 | 1.0 | 8.7 | 11.4 |
| Olefin protons (per molecule) | 7.0 | 5.3 | 7.5 | 4.0 | 4.2 | 2.6 | 2.6 |

<Test Example 1>

[Example 1]

The following components were kneaded using a 250 mL kneader (Labo Plastomill B250, manufactured by Toyo Seiki Co., Ltd.) to obtain a polymer composition. The kneading conditions were: temperature controlled at 70°C, a rotation speed of 50 rpm, and a kneading time consisting of: 0.5 minutes for mastication of the rubber component, followed by 1.5 minutes of kneading after the addition of silica and other additives, followed by 2 minutes of kneading (the rubber temperature during kneading was maintained at 150°C).

·SSBR1 60 parts by mass
·SSBR2 40 parts by mass
·Silica (manufactured by Solvay S.A., product name: 1165MP) 70 parts by mass
·Carbon black (manufactured by Tokai Carbon Co., Ltd., product name: Seast KH) 5.60 parts by mass
·Zinc Oxide No. 3 (manufactured by Toho Zinc Co., Ltd., product name: Ginrei R): 3 parts by mass
·Stearic acid (manufactured by New Japan Chemical Co., Ltd., product name: stearic acid 300) 2 parts by mass
·Antidegradant (manufactured by Ouchi Shinko Chemical Industrial Co., Ltd., product name: NOCRAC 6C)1 part by mass
·Silane coupling agent (manufactured by Evonik Industries AG, product name: Si75) 5.60 parts by mass
·Resin 1 15.0 parts by mass
·Sulfur (manufactured by Hosoi Chemical Industry Co., Ltd., product name: Oil Sulfur 325 mesh (5%)) 1.20 parts by mass

·Vulcanization accelerator 1 (manufactured by Ouchi Shinko Chemical Industrial Co., Ltd., product name: NOCCELER CZ) 1.44 parts by mass
·Vulcanization accelerator 2 (manufactured by Ouchi Shinko Chemical Industrial Co., Ltd., product name: NOCCELER D) 1.20 parts by mass

[Example 2]

A polymer composition was obtained in the same manner as in Example 1, except that 15.0 parts by mass of Resin 2 was added instead of Resin 1.

[Example 3]

A polymer composition was obtained in the same manner as in Example 1, except that 15.0 parts by mass of Resin 3 was added instead of Resin 1.

[Example 4]

A polymer composition was obtained in the same manner as in Example 1, except that 15.0 parts by mass of Resin 4 was added instead of Resin 1.

[Example 5]

A polymer composition was obtained in the same manner as in Example 1, except that 15.0 parts by mass of Resin 5 was added instead of Resin 1.

[Example 6]

A polymer composition was obtained in the same manner as in Example 1, except that 15.0 parts by mass of Resin 6 was added instead of Resin 1.

[Comparative Example 1]

A polymer composition was obtained in the same manner as in Example 1, except that 15.0 parts by mass of aroma oil (T-DAE, manufactured by ENEOS Corporation) was added instead of Resin 1.

[Comparative Example 2]

A polymer composition was obtained in the same manner as in Example 1, except that 15.0 parts by mass of Resin 8 (a homooligomer of alpha-methylstyrene, manufactured by Cray Valley S.A., product name: W-140, number average molecular weight (Mn): 1701) was added instead of Resin 1.

[Evaluation of Physical Properties]

(Viscoelasticity)

Using each of the polymer compositions obtained above, a rubber sheet (thickness 2 mm, length 150 mm, width 150 mm) was obtained by heating and pressurizing for 30 minutes under conditions of 160°C and 20 MPa using a mold (manufactured by Dumbbell Co., Ltd., model number: MP-124NJ).
Subsequently, for the obtained rubber sheet, tan $\delta$ at a measurement temperature of 0°C was determined using a viscoelasticity measuring device (Rheogel E-4000, manufactured by UBM) according to JIS K6394 under conditions of a strain of 20 $\mu$m (about 0.1%) and a frequency of 10 Hz. The measurement results are shown in Table 3. A larger value for tan $\delta$ (0°C) indicates more excellent grip performance. Note that for each of the tan $\delta$ results, Examples 1 to 6 and Comparative Example 1 were described as relative values, with the value for Comparative Example 2 taken as 100.

(Abrasion Resistance)

A rubber sheet was obtained in the same manner as in the above-mentioned viscoelasticity test. Using the obtained rubber sheet, a test piece having the following dimensions was prepared. Subsequently, for the test piece, an

abrasion test was performed using a Lambourn abrasion tester (manufactured by Ueshima Seisakusho Co., Ltd.) according to JIS K6264-7 under the following conditions:

·Slip ratio: 25%
·Applied load: 4.5kg
·Test temperature: 50°C
·Sand feed rate: 10 g/min
·Dimensions: Test piece = diameter 49 mm, thickness 5 mm
Grinding stone = diameter 175 mm, thickness 25 mm

The amount of abrasion was measured from the mass of the test piece before and after the abrasion test. The specific abrasion volume was calculated from the amount of abrasion and the calculated specific gravity, and was described in Table 3 as an index (relative value), with the value for Comparative Example 2 taken as 100. Note that the index for each example is a value calculated by the following formula.

Index of each example = Amount of abrasion of Comparative Example 2 (standard)/Amount of abrasion of each example x 100

That is, a larger index for each example indicates more excellent abrasion resistance.

[Table 3]

| | | Ex. 1 | Ex. 2 | Ex. 3 | Ex. 4 | Ex. 5 | Ex. 6 | Co. Ex. 1 | Co. Ex. 2 |
|---|---|---|---|---|---|---|---|---|---|
| Composition of polymer composition (part by mass) | SSBR1 | 60 | 60 | 60 | 60 | 60 | 60 | 60 | 60 |
| | SSBR2 | 40 | 40 | 40 | 40 | 40 | 40 | 40 | 40 |
| | Silica | 70 | 70 | 70 | 70 | 70 | 70 | 70 | 70 |
| | Carbon black | 5.60 | 5.60 | 5.60 | 5.60 | 5.60 | 5.60 | 5.60 | 5.60 |
| | Zinc oxide | 3 | 3 | 3 | 3 | 3 | 3 | 3 | 3 |
| | Stearic acid | 2 | 2 | 2 | 2 | 2 | 2 | 2 | 2 |
| | Antidegradant (NOCRAC 6C) | 1 | 1 | 1 | 1 | 1 | 1 | 1 | 1 |
| | Silane coupling agent (Si75) | 5.60 | 5.60 | 5.60 | 5.60 | 5.60 | 5.60 | 5.60 | 5.60 |
| | TDAE | 0 | 0 | 0 | 0 | 0 | 0 | 15.0 | 0 |
| | Resin 1 | 15.0 | 0 | 0 | 0 | 0 | 0 | 0 | 0 |
| | Resin 2 | 0 | 15.0 | 0 | 0 | 0 | 0 | 0 | 0 |
| | Resin 3 | 0 | 0 | 15.0 | 0 | 0 | 0 | 0 | 0 |
| | Resin 4 | 0 | 0 | 0 | 15.0 | 0 | 0 | 0 | 0 |
| | Resin 5 | 0 | 0 | 0 | 0 | 15.0 | 0 | 0 | 0 |
| | Resin 6 | 0 | 0 | 0 | 0 | 0 | 15.0 | 0 | 0 |
| | Resin 8 | 0 | 0 | 0 | 0 | 0 | 0 | 0 | 15.0 |
| | Sulfur (5% oil-treated) | 1.20 | 1.20 | 1.20 | 1.20 | 1.20 | 1.20 | 1.20 | 1.20 |
| | vulcanization accelerator (NOCCELER CZ) | 1.44 | 1.44 | 1.44 | 1.44 | 1.44 | 1.44 | 1.44 | 1.44 |
| | Vulcanization accelerator (NOCCELER D) | 1.20 | 1.20 | 1.20 | 1.20 | 1.20 | 1.20 | 1.20 | 1.20 |
| Viscoelasticity | tan δ (0°C) | 101 | 102 | 101 | 102 | 107 | 107 | 72 | 100 |
| Abrasion resistance | index | 142 | 145 | 161 | 162 | 154 | 146 | 100 | 100 |

<Test Example 2>

[Example 7]

A polymer composition was obtained in the same manner as in Example 1, except that 15.0 parts by mass of Resin 7 was added instead of Resin 1.

[Example 8]

A polymer composition was obtained in the same manner as in Example 7, except that 7 parts by mass of SSBR1, 40 parts by mass of SSBR2, and 53 parts by mass of SSBR3 were added as the styrene-butadiene rubber.

[Comparative Example 3]

A polymer composition was obtained in the same manner as in Example 7, except that 40 parts by mass of SSBR2 and 60 parts by mass of SSBR3 were added as the styrene-butadiene rubber.

[Evaluation of Physical Properties]

(Viscoelasticity)

In the same manner as in Test Example 1, rubber sheets were obtained using each of the polymer compositions. Subsequently, for the obtained rubber sheets, tan δ was determined at a measurement temperature of 0°C. The measurement results are shown in Table 4. Note that for each of the tan δ results, Examples 7 and 8 were described as relative values, with the value for Comparative Example 3 taken as 100.

(Abrasion Resistance)

A rubber sheet was obtained in the same manner as in the above-mentioned viscoelasticity test. Subsequently, the amount of abrasion was measured using the obtained rubber sheet in the same manner as in Test Example 1. The specific abrasion volume was calculated from the amount of abrasion and the calculated specific gravity, and was described in Table 4 as an index (relative value), with the value for Comparative Example 3 taken as 100.

[Table 4]

| | | Ex. 7 | Ex. 8 | Co. Ex. 3 |
|---|---|---|---|---|
| Composition of polymer composition (part by mass) | SSBR1 | 60 | 7 | 0 |
| | SSBR2 | 40 | 40 | 40 |
| | SSBR3 | 0 | 53 | 60 |
| | Silica | 70 | 70 | 70 |
| | Carbon black | 5.60 | 5.60 | 5.60 |
| | Zinc oxide | 3 | 3 | 3 |
| | Stearic acid | 2 | 2 | 2 |
| | Antidegradant (NOCRAC 6C) | 1 | 1 | 1 |
| | Silane coupling agent (Si75) | 5.60 | 5.60 | 5.60 |
| | Resin 7 | 15.0 | 15.0 | 15.0 |
| | Sulfur (5% oil-treated) | 1.20 | 1.20 | 1.20 |
| | Vulcanization accelerator (NOCCELER CZ) | 1.44 | 1.44 | 1.44 |
| | Vulcanization accelerator (NOCCELER D) | 1.20 | 1.20 | 1.20 |
| Viscoelasticity | tan δ (0°C) | 119 | 102 | 100 |
| Abrasion resistance | index | 107 | 104 | 100 |

<Test Example 3>

[Example 9]

A polymer composition was obtained in the same manner as in Example 7, except that 40 parts by mass of SSBR2 and 60 parts by mass of SSBR4 were added as the styrene-butadiene rubber.

[Comparative Example 4]

A polymer composition was obtained in the same manner as in Example 9, except that 40 parts by mass of SSBR2 and 60 parts by mass of SSBR5 were added as the styrene-butadiene rubber.

[Evaluation of Physical Properties]

(Viscoelasticity)

In the same manner as in Test Example 1, rubber sheets were obtained using each of the polymer compositions. Subsequently, for the obtained rubber sheets, tan δ was determined at a measurement temperature of 0°C. The measurement results are shown in Table 5. Note that for each of the tan δ results, Example 9 was described as relative values, with the value for Comparative Example 4 taken as 100.

(Abrasion Resistance)

A rubber sheet was obtained in the same manner as in the above-mentioned viscoelasticity test. Subsequently, the amount of abrasion was measured using the obtained rubber sheet in the same manner as in Test Example 1. The specific abrasion volume was calculated from the amount of abrasion and the calculated specific gravity, and was described in Table 5 as an index (relative value), with the value for Comparative Example 4 taken as 100.

[Table 5]

| | | Ex. 9 | Co. Ex. 4 |
|---|---|---|---|
| Composition of polymer composition (part by mass) | SSBR2 | 40 | 40 |
| | SSBR4 | 60 | 0 |
| | SSBR5 | 0 | 60 |
| | Silica | 70 | 70 |
| | Carbon black | 5.60 | 5.60 |
| | Zinc oxide | 3 | 3 |
| | Stearic acid | 2 | 2 |
| | Antidegradant (NOCRAC 6C) | 1 | 1 |
| | Silane coupling agent (Si75) | 5.60 | 5.60 |
| | Resin 7 | 15.0 | 15.0 |
| | Sulfur (5% oil-treated) | 1.20 | 1.20 |
| | Vulcanization accelerator (NOCCELER CZ) | 1.44 | 1.44 |
| | Vulcanization accelerator (NOCCELER D) | 1.20 | 1.20 |
| Viscoelasticity | tan δ (0°C) | 127 | 100 |
| Abrasion resistance | index | 103 | 100 |

<Test Example 4>

[Example 10]

A polymer composition was obtained in the same manner as in Example 7, except that the amount of silica added was changed to 100 parts by mass, the amount of the silane coupling agent added was changed to 8.0 parts by mass, and the amount of Resin 7 added was changed to 40.0 parts by mass.

[Comparative Example 5]

A polymer composition was obtained in the same manner as in Example 10, except that 40.0 parts by mass of Resin 8 was added instead of Resin 7.

[Evaluation of Physical Properties]

(Viscoelasticity)

In the same manner as in Test Example 1, rubber sheets were obtained using each of the polymer compositions. Subsequently, for the obtained rubber sheets, tan δ was determined at a measurement temperature of 0°C. The measurement results are shown in Table 6. Note that for each of the tan δ results, Example 10 was described as relative values, with the value for Comparative Example 5 taken as 100.

(Abrasion Resistance)

A rubber sheet was obtained in the same manner as in the above-mentioned viscoelasticity test. Subsequently, the amount of abrasion was measured using the obtained rubber sheet in the same manner as in Test Example 1. The specific abrasion volume was calculated from the amount of abrasion and the calculated specific gravity, and was described in Table 6 as an index (relative value), with the value for Comparative Example 5 taken as 100.

[Table 6]

| | | Ex. 10 | Co. Ex. 5 |
|---|---|---|---|
| Composition of polymer composition (part by mass) | SSBR1 | 60 | 60 |
| | SSBR2 | 40 | 40 |
| | Silica | 100 | 100 |
| | Carbon black | 5.60 | 5.60 |
| | Zinc oxide | 3 | 3 |
| | Stearic acid | 2 | 2 |
| | Antidegradant (NOCRAC 6C) | 1 | 1 |
| | Silane coupling agent (Si75) | 8.0 | 8.0 |
| | Resin 7 | 40.0 | 0 |
| | Resin 8 | 0 | 40.0 |
| | Sulfur (5% oil-treated) | 1.20 | 1.20 |
| | Vulcanization accelerator (NOCCELER CZ) | 1.44 | 1.44 |
| | Vulcanization accelerator (NOCCELER D) | 1.20 | 1.20 |
| Viscoelasticity | tan δ (0°C) | 117 | 100 |
| Abrasion resistance | index | 123 | 100 |

**Claims**

**1.** A polymer composition, comprising:

a rubber component comprising a conjugated diene polymer (A-1); and
at least one selected from the group consisting of a polymer of a raw material component containing a C5 fraction containing an aliphatic olefin, and a polymer of a raw material component containing a C9 fraction containing an aromatic olefin and a C5 fraction containing an aliphatic olefin,
wherein
said conjugated diene polymer (A-1) comprises a structural unit derived from a conjugated diene compound and a structural unit derived from an aromatic vinyl compound;
the amount of the structural unit derived from an aromatic vinyl compound is 5% by mass or more and 60% by mass or less with respect to the total amount of the structural unit derived from a conjugated diene compound and the structural unit derived from an aromatic vinyl compound; and
the amount of a segment comprising isolated aromatic vinyl compound units in which the aromatic vinyl compound units are not continuous is less than 40% by mass, and the amount of a segment comprising a long sequence of consecutive aromatic vinyl compound units in which 8 or more aromatic vinyl compound units are continuous is 10% by mass or less, with respect to the amount of the structural unit derived from an aromatic vinyl

compound.

2. The polymer composition according to claim 1, wherein said C5 fraction containing an aliphatic olefin comprises at least one selected from the group consisting of piperylene, isoprene, 1-pentene, 2-pentene, 2-methyl-1-butene, 2-methyl-2-butene, 3-methyl-1-butene, 1,2-pentadiene, and 3-methyl-1,2-butadiene.

3. The polymer composition according to claim 1, wherein said C9 fraction containing an aromatic olefin comprises at least one selected from the group consisting of vinyltoluene, alpha-methylstyrene, styrene, indene, and methylindene.

4. The polymer composition according to claim 1, wherein the proton amount per molecule of said polymer of a raw material component satisfies the following conditions:

$0 \leq$ aromatic proton amount $\leq 95$; and
$0 \leq$ olefin proton amount $\leq 90$.

5. The polymer composition according to claim 1, wherein the number average molecular weight (Mn) of said polymer of a raw material component is 300 g/mol or more and less than 3000 g/mol.

6. The polymer composition according to claim 1, wherein the amount of said conjugated diene polymer (A-1) is 5% by mass or more of the total amount of the rubber component.

7. The polymer composition according to claim 1, wherein said conjugated diene polymer (A-1) has a nitrogen-containing group and a hydrocarbyloxysilyl group.

8. The polymer composition according to claim 1, further comprising a filler.

9. A rubber product formed using the polymer composition according to any one of claims 1 to 8.

10. The rubber product according to claim 9, wherein said rubber product is selected from the group consisting of a tire, a tire tread, and a sidewall.

## INTERNATIONAL SEARCH REPORT

International application No.
**PCT/JP2024/011145**

**A. CLASSIFICATION OF SUBJECT MATTER**

***C08L 9/06***(2006.01)i; ***C08C 19/44***(2006.01)i; ***C08K 3/013***(2018.01)i; ***C08L 15/00***(2006.01)i; ***C08L 57/00***(2006.01)i
FI: C08L9/06; C08L15/00; C08K3/013; C08L57/00; C08C19/44

According to International Patent Classification (IPC) or to both national classification and IPC

**B. FIELDS SEARCHED**

Minimum documentation searched (classification system followed by classification symbols)

C08K3/00-13/08; C08L1/00-101/14; C08C19/00-19/44; C08F6/00-246/00;301/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-33549 A (ASAHI KASEI KABUSHIKI KAISHA) 05 March 2020 (2020-03-05) claims, paragraphs [0037]-[0085], [0151]-[0153], examples | 1-10 |
| A | JP 2022-66144 A (ASAHI KASEI KABUSHIKI KAISHA) 28 April 2022 (2022-04-28) entire text | 1-10 |
| A | WO 2022/255314 A1 (ENEOS CORPORATION) 08 December 2022 (2022-12-08) entire text | 1-10 |
| A | WO 2019/207925 A1 (JXTG NIPPON OIL & ENERGY CORPORATION) 31 October 2019 (2019-10-31) entire text | 1-10 |
| A | JP 2009-108193 A (TOSOH CORP.) 21 May 2009 (2009-05-21) entire text | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/011145**

| Patent document cited in search report | Publication date (day/month/year) | Patent family member(s) | Publication date (day/month/year) |
|---|---|---|---|
| JP 2020-33549 A | 05 March 2020 | CN 110862590 A<br>claims, paragraphs [0176]-[0281], [0409]-[0454], examples<br>KR 10-2020-0024722 A | |
| JP 2022-66144 A | 28 April 2022 | EP 3988327 A1<br>entire text<br>CN 114369297 A | |
| WO 2022/255314 A1 | 08 December 2022 | CN 117396528 A<br>entire text<br>KR 10-2024-0008376 A | |
| WO 2019/207925 A1 | 31 October 2019 | (Family: none) | |
| JP 2009-108193 A | 21 May 2009 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2018536044 T
- JP 2018193567 A
- JP 2011140613 A

### Non-patent literature cited in the description

- **TANAKA et al.** *Polymer*, 1981, vol. 22, 1721